# EUROPÄISCHE PATENTANMELDUNG

(11) **EP 2 849 298 A1**
(43) Veröffentlichungstag der Anmeldung: **18.03.2015**
(21) Anmeldenummer: 14181779.1
(22) Anmeldetag: 21.08.2014
(51) Int. Cl.: H02G 3/06, H02G 3/08

(54) **Vorrichtung für Elektroinstallationen**

(30) Priorität: 29.08.2013 CH 14702013; 24.04.2014 CH 6262014
(71) Anmelder: Morach, Christoph, 8335 Hittnau (CH)
(72) Erfinder: Morach, Christoph, 8335 Hittnau (CH)
(74) Vertreter: Frei Patent Attorneys

(57) **Zusammenfassung**

Eine Vorrichtung für Elektroinstallationen weist mindestens eine Elektroinstallationsdose (2) und mindestens ein Rastelement (1) auf. Die Elektroinstallationsdose (2) weist mindestens einen Anschlusskanal (21) auf, wobei in den Anschlusskanal (21) ein gerilltes Installationsrohr (3) einführbar ist. Das Rastelement (1) weist mindestens eine Rastkralle (11) auf, wobei die Rastkralle (11) in eine Rille des Installationsrohrs (3) einrastbar ist. Das Rastelement (1) ist separat von der Elektroinstallationsdose (3) ausgebildet. Das Rastelement (1) ist in den Anschlusskanal (21) einschiebbar. (Figur 1)

## Beschreibung

Die Erfindung bezieht sich auf das Gebiet der Installationstechnik, sie bezieht sich insbesondere auf eine Vorrichtung für Elektroinstallationen.

Elektroinstallationsdosen weisen im Regelfall eine Rohreinführung auf. Die Rohreinführung weist häufig einen Rohreinführungsstutzen zur Aufnahme eines Installationsrohres auf. Um ein Herausrutschen des Installationsrohrs aus dem Rohreinführungsstutzen zu verhindern, können Elektroinstallationsdosen eine Raste aufweisen, welche in einer Rille eines geriffelten Installationsrohrs einrasten kann. Eine solche Raste ist mit der Elektroinstallationsdose verbunden und häufig aus den gleichen Kunststoff gefertigt. Aus Kostengründen bestehen Elektroinstallationsdosen grösstenteils aus günstigem Kunststoff, der eine beschränkte Festigkeit aufweist. Aufgrund der geringen Festigkeit der Elektroinstallationsdose und der Raste kann es insbesondere bei extremen Verhältnissen (z.B. Hitze im Sommer) zu einem Lösen der Verbindung zwischen der Elektroinstallationsdose und dem Installationsrohr kommen. Ein solches Lösen kann zu einem Versagen der gesamten Elektroinstallation führen. Um ein solches Lösen zu vermeiden, werden in der Praxis häufig zusätzliche Befestigungsmittel verwendet um das Installationsrohr an der Elektroinstallationsdose beispielsweise anzubinden. Ein solches Anbinden ist aufwendig und erfordert neben zusätzlichen Befestigungsmitteln auch zusätzliche zeitraubende Arbeits- und Kontrollaufwand.

Bei einer Herstellung der Elektroinstallationsdose wird vielfach auf ein Spritzgussverfahren zurückgegriffen, wobei die Anformung einer Raste spezielle Entformungstechniken verlangt, die die Ausgestaltung der Rasten einschränkt oder die Herstellung verteuert.

EP 1 737 094 zeigt Unterputzdosen mit einer hohlzylindrischen Muffe, welche nach innen vorspringenden Haltemittel für ein Wellrohr aufweist. Die Muffe mit den Haltemitteln ist so ausgebildet, dass an der gleichen Muffe Wellrohre mit zwei unterschiedlichen Aussendurchmessern angeschlossen werden können.

Es ist deshalb Aufgabe der Erfindung, eine Vorrichtung für Elektroinstallationen der zu schaffen, welche ein Lösen einer Verbindung zwischen einer Elektroinstallationsdose und einem Installationsrohr auch unter extremen Bedingungen verhindert.

Diese Aufgabe löst eine Vorrichtung mit mindestens einer Elektroinstallationsdose und mindestens einem Rastelement.

Die Vorrichtung für Elektroinstallationen weist mindestens eine Elektroinstallationsdose und mindestens ein Rastelement auf. Die Elektroinstallationsdose weist mindestens einen Anschlusskanal auf, wobei in den Anschlusskanal ein gerilltes Installationsrohr einführbar ist und der Innendurchmesser des Anschlusskanals an den Aussendurchmesser des Installationsrohrs angepasst ist. Das Rastelement weist mindestens eine Rastkralle zur einrastenden Befestigung eines Installationsrohrs im Anschlusskanal auf. Das Rastelement ist separat von der Elektroinstallationsdose ausgebildet, das heisst die Elektroinstallationsdose und das Rastelement sind einzeln und unabhängig voneinander herstellbar. Des Weiteren kann das Rastelement in den Anschlusskanal einschiebbar sein. Die Elektroinstallationsdose kann auch als Installationsdose bezeichnet werden.

Dadurch wird es möglich, dass das Installationsrohr durch ein Einrasten an der Rastkralle relativ zum Rastelement und damit zur Installationsdose fixiert werden kann. Durch das Einrasten wird das Installationsrohr mechanisch fixiert und auch bei extremen Bedingungen wird ein Lösen der Fixierung unterbunden.

Der Anschlusskanal ist zum Innenraum der Installationsdose hin mit einer Membran abgedichtet, so dass bei einem eventuellen Einbetonieren der Vorrichtung kein Beton in den Innenraum der Installationsdose eindringen kann. Wird ein Installationsrohr am Anschlusskanal angeschlossen, so kann zunächst die abdichtende Membran entfernt bzw. herausgeschlagen werden und das fixierte Installationsrohr übernimmt die abdichtende Wirkung.

Die Installationsdose kann eine Vielzahl von Anschlusskanälen aufweisen, wobei die verschiedenen Anschlusskanäle verschiedene Innendurchmesser aufweisen können um Installationsrohre unterschiedlichen Aussendurchmessern fixieren zu können. In Ausführungsformen der Erfindung ist es möglich, dass ein Anschlusskanal einen konstanten Innendurchmesser aufweist und somit verschiedene Anschlusskanäle je konstante und von einem anderen Anschlusskanal verschiedene Innendurchmesser aufweisen. Es ist auch möglich, dass ein Anschlusskanal verschiedene Innendurchmesser aufweist. Beispielsweise kann ein Anschlusskanal in einem ersten Abschnitt einen grösseren Innendurchmesser aufweisen als in einen zweiten Abschnitt. Der erste Abschnitt (grösserer Innendurchmesser) des Anschlusskanals ist in diesem Fall näher zu einer Einführungsöffnung des Anschlusskanals hin angeordnet als der zweite Abschnitt (kleinerer Innendurchmesser).

Der Übergang vom ersten zum zweiten Abschnitt des Anschlussrohres kann zumindest abschnittsweise fliessend respektive stetig oder kontinuierlich sein, wodurch die Ausbildung von Anstosskanten verhindert werden kann. Auf diese Weise wird es möglich, dass Kabel die durch das Installationsrohr geführt werden, ohne hängen zu bleiben (barrierefrei) in die Installationsdose eingeführt werden können. Der im Wesentlichen fliessende Übergang kann beispielsweise durch eine abgeschrägte Kanalverengung realisiert werden.

Die Installationsdose kann beispielsweise als Abzweigdose oder Lampendose oder Verteildose oder Ähnliches ausgebildet sein.

Das Rastelement kann mindestens ein Klemmelement aufweisen, wobei das Rastelement durch das Klemmelement im Anschlusskanal fixierbar ist. Dadurch kann das Rastelement im Anschlusskanal eingeklemmt werden. Die mechanische Fixierung des Rastelements bewirkt eine weitere Stabilisierung der Installationsrohrfixierung mit Hilfe des ebenfalls am Rastelement eingerasteten Installationsrohrs. Mit anderen Worten: Das Klemmelement bewirkt eine mechanische Fixierung des Rastelements am Anschlusskanal und damit an der Installationsdose. Aufgrund der zuvor beschriebenen Fixierung des Installationsrohrs am Rastelement wird die Verbindung zwischen der Installationsdose und dem Installationsrohr weiter verstärkt und ein Lösen der Verbindung noch wirksamer unterbunden.

Der Anschlusskanal kann mindestens eine Aussparung aufweisen, wobei das Rastelement mit Hilfe des Klemmelements in der Aussparung fixierbar ist. Dadurch wird es möglich, dass das Klemmelement in der Aussparung einrastet und so die fixierende Wirkung auf die Verbindung zwischen der Installationsdose und dem Installationsrohr weiter unterstützt wird.

Des Weiteren kann der Anschlusskanal mindestens eine Aufnahme für das Einführen des Rastelements aufweisen. Dadurch wird es möglich, dass das Rastelement in den Anschlusskanal eingeführt werden kann und in der Aufnahme geführt werden kann. Durch das Führen in der Aufnahme kann das Klemmelement direkt zur Aussparung am Anschlusskanal geleitet werden, wo die beiden Elemente (Klemmelement, Aussparung) ineinander einrasten. Die Aufnahme ist so ausgeformt, dass ihre Form zur Form des Rastelements korrespondiert. Das ist beispielsweise durch mindestens eine Nut an der Aufnahme und einen korrespondierenden Steg am Rastelement realisierbar. Es ist auch möglich, dass das Rastelement mindestens eine Nut aufweist und die Aufnahme einen korrespondierenden Steg aufweist. Des Weiteren können auch mehrere Nuten mit mehreren Stegen für die Führung des Rastelements in der Aufnahme dienen. Die Nuten können beispielsweise parallel zum Anschlusskanal verlaufen. In anderen Ausführungsformen kann das Rastelement durch eine Drehbewegung am Anschlusskanal fixiert werden. In solchen Ausführungsformen sind die Nuten und/oder Stege gewindeförmig ausgebildet. Es ist auch denkbar, dass das Rastelement mit Hilfe eines Bajonettverschlusses am Anschlusskanal fixiert werden kann.

Die Aufnahme kann einen Anschlag aufweisen und das Rastelement kann eine Schulter aufweisen. Dabei sind die Schulter und der Anschlag so korrespondierend zueinander ausgebildet oder geformt, so dass das Einführen/Einschieben des Rastelements durch ein Wechselwirken zwischen dem Anschlag und der Schulter begrenzt wird. Das Wechselwirken einspricht einem Anstossen der Schulter an den Anschlag und begrenzt damit das Einführen des Rastelements in die Aufnahme. Der Anschlag und die Schulter sind dabei so aufeinander abgestimmt, dass beim Einführen des Rastelements bis zum Anschlag das Klemmelement in der Aussparung fixiert wird.

Eine rohrseitige Fläche des Rastelements kann zumindest abschnittsweise einer Kreiszylinderfläche entsprechen. Mit anderen Worten: Das Rastelement beschreibt gemäss einer Ausführungsform rohrseitig einen Kreisbogen. Die rohrseitige Seite des Rastelements ist im eingeführten Zustand dem Installationsrohr zugewandt und liegt der Seite gegenüber, die dem Anschlusskanal zugewandt ist. Die Länge des Kreisbogens kann dabei kürzer als der Umfang des Anschlusskanals bzw. des Aussendurchmessers des Installationsrohrs sein. Dadurch wird es möglich, dass sich der Kreisbogen an den Aussendurchmesser des Installationsrohrs anpasst bzw. mit ihm übereinstimmt. Auf diese Weise kann das Rastelement parallel zum Installationsrohr an seiner Aussenwandung entlang verlaufen und so stabilisiert werden.

In weiteren Ausführungsformen sind Installationsrohre mit unterschiedlichen Durchmessern am Rastelement einrastbar. Das bedeutet zum einen, dass das Rastelement so ausgeformt sein kann, dass es in Anschlusskanäle mit unterschiedlichen Durchmessern einführbar ist. Auf diese Weise können die entsprechenden Installationsrohre mit einem definierten Aussendurchmesser in den Anschlusskanal eingeführt werden und so am Rastelement einrasten. Zum anderen können an einem Rastelement, welches in einem Anschlusskanal eingeführt ist verschieden dicke Installationsrohre (unterschiedliche Aussendurchmesser) eingerastet werden. Das Einrasten in verschieden dicke Installationsrohre kann dabei auf verschiedene Weisen realisiert werden. Zum einen kann das Rastelement in verschiedene Anschlusskanäle mit unterschiedlichen Durchmessern eingeführt werden. Zum anderen ist es möglich, dass der Anschlusskanal unterschiedliche Durchmesser aufweist.

In Ausführungsformen kann der Anschlusskanal beispielsweise wie oben beschrieben in einem ersten Abschnitt einen grösseren Innendurchmesser aufweisen als in einen zweiten Abschnitt mit einem kleineren Innendurchmesser. Auf diese Weise wird es möglich, dass in den ersten Abschnitt ein Installationsrohr mit einem grossen Aussendurchmesser (Aussendurchmesser des Installationsrohrs korrespondierend mit dem Innendurchmesser des ersten Abschnitts) eingeführt werden kann. Aufgrund einer Kanalverengung zum zweiten Abschnitt hin kann das Installationsrohr nicht weiter in den Anschlusskanal eingebracht werden kann. Das Installationsrohr kann dabei an die Kanalverengung anstossen. Im Bereich des Anstosses kann die Kanalverengung einen Vorsprung aufweisen, welcher das weitere Einführen des Installationsrohrs in den Anschlusskanal begrenzt. Durch diese Begrenzung kann die Position des Installationsrohres genau definiert werden, wodurch die Dichtigkeit der Vorrichtung gegen das Eindringen von Betonwasser unterstützt werden kann.

Der Anschlusskanal kann einen Anstoss für ein Installationsrohr mit einem grossen Aussendurchmesser im ersten Abschnitt und/oder einen einen Anstoss für ein Installationsrohr mit einem kleinen Aussendurchmesser im zweiten Abschnitt aufweisen.

Ein Anstoss kann eine Einführtiefe des Installationsrohres im Anschlusskanal begrenzten. Auf diese Weise kann ein Inneres der Installationsdose frei von einem Installationsrohr bleiben und somit ein Freiraum in Inneren der Installationsdose erhalten bleiben, wodurch die Handhabung der Installationsdose unbeeinträchtigt bleibt.

Die Rastkralle des Rastelements kann am Installationsrohr einrasten und dieses somit im Anschlusskanal an der Installationsdose befestigen. Des Weiteren ist es möglich ein Installationsrohr mit einem kleinen Aussendurchmesser (Aussendurchmesser des Installationsrohrs korrespondierend mit dem Innendurchmesser des zweiten Abschnitts) in den Anschlusskanal einzuführen. Das Installationsrohr kann dabei über den ersten Abschnitt und die Kanalverengung hinaus auch in den zweiten Abschnitt eingeführt und befestigt werden.

In Ausführungsformen ist die Kanalverengung vom ersten Abschnitt zum zweiten Abschnitt des Kabelkanals zumindest abschnittsweise als stetiger Übergang ausgebildet. Dadurch wird es möglich, dass zum einen ein Installationsrohr mit einem Aussendurchmesser kleiner als der Innerdurchmesser des ersten Abschnitts und grösser als der Innendurchmesser des zweiten Abschnitts im Anschlusskanal befestigt werden kann, da der stetige respektive kontinuierliche, fliessende Übergang die Möglichkeit bietet, das Installationsrohr zwischen dem Rastelement und dem Anschlusskanal einzuklemmen und durch ein Einrasten an der Rastkralle zu fixieren. Zum anderen wird es möglich, dass das Einführen eines Installationsrohrs mit einem Aussendurchmesser kleiner als der Innendurchmesser des ersten Abschnitts in den zweiten Abschnitt zu erleichtern. Das Einführen wird dadurch erleichtert, dass das Installationsrohr nicht an einer unstetigen Stelle, wie beispielsweise einer Kante oder Stufe, abstossen kann, wodurch das passgenaue Einführen erschwert werden würde. Des Weiteren dient die Kanalverengung dem barrierefreien (ohne hängen bleiben) Einführen von Installationskabeln nach dem Befestigen oder Einbetonieren der Installationsdose, insbesondere bei der Befestigung eines Installationsrohrs mit einem grossen Aussendurchmesser.

In weiteren Ausführungsformen weist das Rastelement mindestens zwei Rastkrallen auf. Auf diese Weise kann zum einen ein Installationsrohr an mindesten zwei Stellen mit dem Rastelement einrasten, wodurch das Einrasten am Installationsrohr verbessert werden kann. Zum anderen können Installationsrohre mit verschiedenen Riffelungen oder Rippen an dem Rastelement eingerastet und im Anschlusskanal eingeklemmt werden. Die Riffelung oder die Rippen von Installationsrohren kann/können sich beispielsweise im Abstand, dem Durchmesser und/oder der Grösse der Riffel respektive Rippen unterscheiden.

Die mindestens zwei Rastkrallen können axial über die Länge des Rastelements verteilt angeordnet sein. Die Länge des Rastelements erstreckt sich entlang der Einführungsrichtung des Rastelements in den Anschlusskanal.

In einem eingerasteten Zustand des Rastelements im Anschlusskanal kann eine erste Rastkralle im ersten Abschnitt und eine zweite Rastkralle im zweiten Abschnitt des Anschlusskanals angeordnet sein. Dadurch wird es möglich, das Einrasten des Rastelements in verschieden grosse Installationsrohre zu erleichtern, da die Rastkrallen an die jeweils in den Abschnitten des Anschlusskanals befestigbaren Installationsrohre angepasst werden können. Eine solche Anpassung kann beispielsweise durch die Position der Rastkralle bezüglich des Klemmelements realisiert werden. Die Anpassung kann auch durch eine Variation der Ausdehnung der Rastkrallen verwirklicht werden.

Die Fixierung der verschieden dicken Installationsrohre kann dadurch ermöglich werden, dass die Rastkralle elastisch ausgeformt ist, so dass einerseits ein dickes Installationsrohr (grosser Aussendurchmesser) die Rastkralle verformen kann, bis sie an einer Rille einrastet. Andererseits ist die Rastkralle gross genug ausgebildet, um auch in ein dünnes Installationsrohr (kleiner Aussendurchmesser) einrasten zu können. Mit anderen Worten, können am gleichen Rastelement verschieden dicke Installationsrohre einrasten. Es ist ausserdem möglich, dass in die gleiche Aufnahme verschiedene Rastelemente einführbar sind, wobei jedes dieser Rastelemente auf einen spezifischen Aussendurchmesser eines Installationsrohrs angepasst ist.

Das Rastelement kann einstückig ausgebildet sein, wodurch eine vereinfachte Handhabung beim Einführen in den Anschlusskanal ermöglicht wird.

Die Rastkralle und/oder das Klemmelement können eine höhere Festigkeit als die Installationsdose aufweisen, dadurch wird es möglich, dass beim Einrasten die Rastkralle bzw. das Klemmelement nicht beschädigt werden. Die erhöhte Festigkeit fördert ausserdem das stabile Fixieren des Installationsrohrs.

Das Rastelement kann in einem Zwei- beziehungsweise Mehrkomponentenspritzgussverfahren hergestellt sein. Dadurch wird es möglich, zum einen die Elemente des Rastelements, die besonders stark beansprucht werden (bspw. Rastkralle und/oder Klemmelement) aus einem strapazierfähigen und stabilen Material auszugestalten. Zum anderen können weniger stark beanspruchte Elemente des Rastelements (bspw. Anschlag oder der "Körper" des Rastelements) aus einem günstigen formstabilen Material ausgestaltet sein.

Die Installationsdose kann Polyethylen hoher Dichte (PE-HD) aufweisen. Im Gegenzug kann das Rastelement Polycarbonat (PC) und/oder PC-Blend aufweisen. Das Rastelement kann alternativ auch Polyamid (PA) aufweisen.

Das Rastelement kann mindestens teilweise einem Material mit hoher Festigkeit gefertigt sein. Das Rastelement kann aus Metall, insbesondere beispielsweise aus Stahl oder Federstahl gefertigt sein. Insbesondere die stark beanspruchen Elemente des Rastelements können so eine hohe Festigkeit aufweisen.

Das Rastelement kann entlang des inneren Umfangs des Anschlusskanals ausgebildet sein, wobei sich das Rastelement entlang maximal 50%, insbesondere maximal 25 % des inneren Umfangs des Anschlusskanals erstreckt. Dadurch, dass sich das Rastelement entlang des inneren Umfangs des Anschlusskanals erstreckt, wird ein Teil des inneren Umfangs des Anschlusskanals vom Rastelement abgedeckt. Auf diese Weise wird der Anschlusskanal bzw. das Rastelement stabilisiert, wodurch die Fixierung des Installationsrohrs gefördert wird.

Das Rastelement kann die Form eines Plättchens (Plättchenform) aufweisen, wobei das Plättchen auch leicht gebogen sein kann.

Der Anschlusskanal kann eine Führung für das Einführen des Rastelements aufweisen, wodurch ein Einschieben des Rastelements beispielsweise in die Aufnahme erleichtert wird. Es ist ausserdem möglich, dass an der Führung zusätzlich ein Befestigungsmittel für eine Fixierung des Installationsrohrs angebracht werden kann. Das Befestigungsmittel kann beispielsweise ein Draht oder Strick sein.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Installationsdose mit einem eingeführten Installationsrohr und separaten Rastelementen;
- Figur 2: eine Schnittzeichnung durch ein Rastelement welches an einem Installationsrohr eingerastet ist;
- Figur 3: verschiedene Ansichten eines Rastelements;
- Figur 4: weitere Ausführungsformen eines Rastelements;
- Figur 5: verschiedene Ansichten eines Anschlusskanals mit einem in ein dünnes Installationsrohr eingerastetes Rastelement;
- Figur 6: verschiedene Ansichten eines Anschlusskanals mit einem in ein dickes Installationsrohr eingerastetes Rastelement;
- Figur 7: verschiedene Ansichten eines Rastelements mit zwei Rastkrallen und einem Klemmelement; und
- Figur 8: verschiedene Ansichten eines Rastelements mit drei Rastkrallen und zwei Klemmelementen.

Grundsätzlich sind in den Figuren gleiche oder analoge Teile mit gleichen Bezugszeichen versehen.

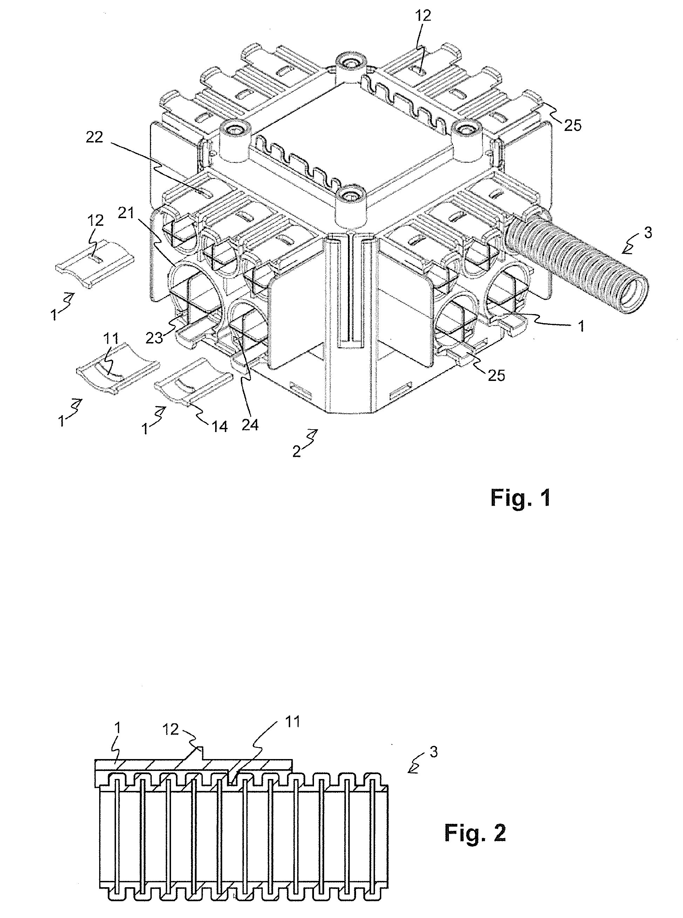

**Figur 1** zeigt eine rechteckige Installationsdose 2 mit einem eingeführten Installationsrohr 3 und separaten Rastelementen 1, welche zum Teil getrennt und zum Teil in die Installationsdose 2 eingeführt gezeichnet sind. An einer Seitenwand der Installationsdose 2 sind Anschlusskanäle 21 zum Einführen eines gerillten Installationsrohrs 3 angeordnet. Die Anschlusskanäle 21 weisen verschiedene Durchmesser auf, um Installationsrohre 3 unterschiedlicher Dicke (Aussendurchmesser) aufzunehmen.

Ein Anschlusskanal 21 weist eine Aufnahme 23 auf in welche das Rastelement 1 eingeführt werden kann. Um das Einführen zu erleichtern weist der Anschlusskanal 21 eine Führung 25 auf, auf welche das Rastelement 1 aufgelegt werden kann. Der Anschlusskanal 21 weist weiterhin eine Aussparung 22 auf.

Das Rastelement 1 weist rohrseitig eine Rastkralle 11 auf, welche in eine Rille des Installationsrohrs 3 einrasten kann (siehe Figur 2). Die rohrseitige Seite des Rastelements 1, ein jene die in einem das Installationsrohr 3 fixierenden Zustand dem Installationsrohr 3 zugewandt ist.

Auf einer dem Installationsrohr 3 abgewandten Seite weist das Rastelement 1 ein Klemmelement 12 auf. Das Klemmelement 12 ist so ausgebildet, dass sie das Rastelement 1 in der Aussparung 22 am Anschlusskanal 21 fixieren kann. Das Klemmelement 12 und die Aussparung 22 sind so aufeinander abgestimmt, dass sie ineinander greifen können und eine stabile Fixierung gewährleisten.

Das Installationsrohr 3 kann nach dem Einführen des Rastelements 1 in die Aufnahme 23 des Anschlusskanals 21 auch in den Anschlusskanal 21 geschoben werden. Die Rastkralle 11 rastet dabei über die Rillen des Installationsrohrs 3 und verhindert eine Bewegung des Installationsrohrs 3 aus dem Anschlusskanal 21 heraus. Das heisst, dass das Installationsrohr 3 im Anschlusskanal 21 fixiert wird.

Eine Schulter 14, die am Rastelement 1 ausgebildet ist, kann das Einführen des Rastelements 1 in die Aufnahme 23 begrenzen. Eine solche Begrenzung wird durch ein Anstossen der Schulter 14 an einen Anschlag 24 am Anschlusskanal 21 in der Aufnahme 23 bewirkt.

**Figur 2** zeigt eine Schnittzeichnung durch ein Rastelement 1 welches an einem Installationsrohr 3 eingerastet ist.

Die Rastkralle 11 ist auf der Seite, von der aus das Installationsrohr 3 eingeschoben wird leicht abgeschrägt. Diese Abschrägung erleichtert das Einschieben des Installationsrohrs 3. Die der Abschrägung entgegengesetzte Seite verläuft senkrecht zum Installationsrohr 3. Auf diese Weise können die Rillen des Installationsrohrs 3 leicht über die Abschrägung geschoben werden und das Herausziehen verhindert werden. Das Klemmelement 12 ist entgegengesetzt dazu ausgebildet. Dadurch erleichtert eine Abschrägung das Einführen des Rastelements 1 in den Anschlusskanal 21 (nicht gezeigt) und die entgegengesetzte Seite verhindert ein Herausrutschen des Rastelements 1 aus dem Anschlusskanal 21.

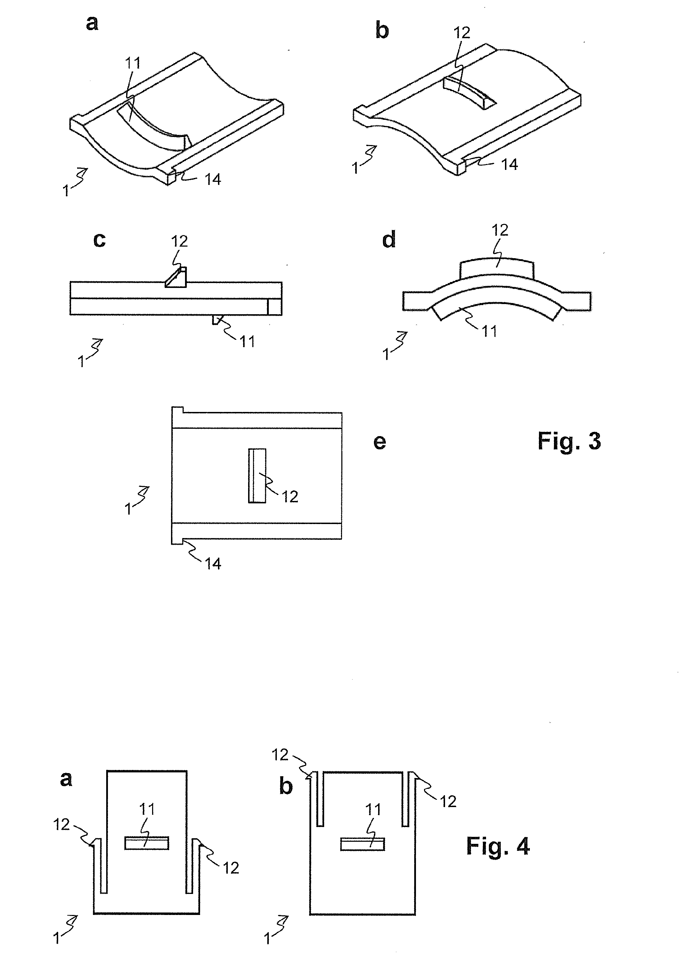

**Figuren 3**a-e zeigen verschiedene Ansichten eines Rastelements 1 mit einer Plättchenform. Die rohrseitige Seite des Rastelements 1 weist eine Wölbung auf, die mit dem Aussendurchmesser des Installationsrohrs 3 korrespondiert. Rohrseitig weist das Rastelement 1 die Rastkralle 11 auf.

Die dem Installationsrohr 3 abgewandte Seite ist dem Anschlusskanal 21 zugewandt. Das Klemmelement 12 auf dieser Seite verhindert das Herausrutschen des Rastelements 1 aus dem Anschlusskanal 21 und ist in einer Aussparung 22 am Anschlusskanal 21 einrastbar.

**Figuren 4** a und b zeigen weitere Ausführungsformen eines Rastelements 1, wobei die Plättchenform, sowie die Ausformung der Rastkralle 11 den Ausführungen aus den vorangegangen Figuren ähnelt bzw. gleicht. Die Klemmelemente 12 sind als Arme seitlich der Rastkralle 11 ausgeformt. Die Klemmelemente 12 sind am Ende angeschrägt geformt um das Einführen und das Einrasten in den Anschlusskanal 21 zu erleichtern. Das Klemmelement 12 kann im Anschlusskanal 21 einrasten und das Rastelement 1 relativ zur Installationsdose 2 fixieren.

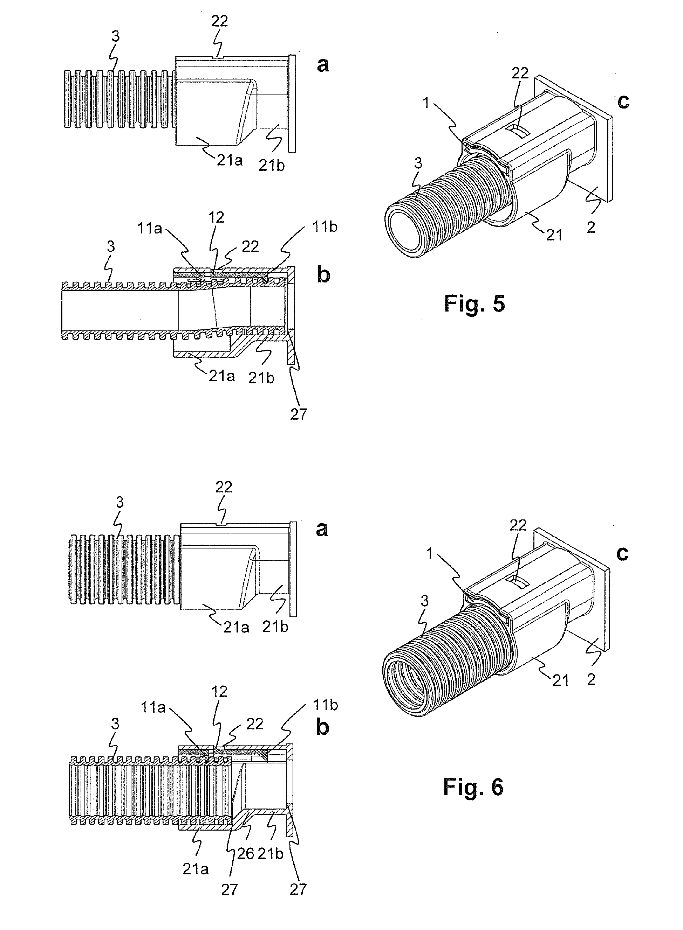

**Figuren 5**a, b und c zeigen verschiedene Ansichten eines Anschlusskanals 21 mit einem in ein dünnes Installationsrohr 3 eingerastetes Rastelement 1. **Figuren 6**a, b und c zeigen verschiedene Ansichten eines Anschlusskanals 21 mit einem in ein dickes Installationsrohr 3 eingerastetes Rastelement 1.

Der Anschlusskanal 21 weist zwei Abschnitte auf, wobei der erste Abschnitt 21 a einen grösseren Innendurchmesser hat als der zweite Abschnitt 21b. Das Rastelement 1 weist zwei Rastkrallen 11 auf, wobei in eingerasteten Zustand die erste Rastkralle 11 a im ersten Abschnitt 21 a und die zweite Rastkralle 11b im zweiten Abschnitt 21 b angeordnet ist. Die beiden Rastkrallen 11 sind entlang der Längsachse des Rastelements 1 angeordnet, wobei die Längsachse entlang der Einführungsrichtung des Rastelements 1 in den Anschlusskanal 21 verläuft. Das Klemmelement 12 ist zwischen den beiden Rastkrallen 11 angeordnet und ist in einer Aussparung 22 des Anschlusskanals 21 eingerastet.

Das dünne Installationsrohr 3 in den Figuren 5a, b und c weist einen Aussendurchmesser auf, der zum Innendurchmesser des zweiten Abschnitts 21b korrespondiert. Das dünne Installationsrohr 3 ist durch den ersten Abschnitt 21 a über eine Kanalverengung 26 hinaus in den zweiten Abschnitt 21b eingeführt. Dabei ist die Kanalverengung 26 stetig, respektive kontinuierlich/fliessend oder als schräge Führung ausgebildet, so dass das Installationsrohr 3 im Wesentlichen ohne Hindernis in den zweiten Abschnitt 21b eingeführt werden kann.

Die zweite Rastkralle 11 b ist in eine Rille des Installationsrohrs 3 eingerastet und das Klemmelement 12 ist in der Aussparung 22 des Anschlusskanals 21 eingeklemmt. Das Installationsrohr 3 mit dem dünnen Aussendurchmesser ist somit an der Installationsdose 2 über das Rastelement 1 befestigt.

Im Bereich eines Anstosses 27 weist die Kanalverengung 26 einen Vorsprung auf, welcher das weitere Einführen des Installationsrohrs in den Anschlusskanal begrenzt. Der Anstoss 27 wird in diesem Ausführungsbeispiel durch eine Wand einer Elektroinstallationsdose gebildet.

Das dicke Installationsrohr 3 in den **Figuren 6**a, b und c weist einen Aussendurchmesser auf, der zum Innendurchmesser des ersten Abschnitts 21a korrespondiert. Das dicke Installationsrohr 3 ist in den ersten Abschnitt 21 a hinein eingeführt. Aufgrund der Kanalverengung 26, also der Verkleinerung des Innendurchmessers des Anschlusskanals 21 wird das weitere Einführen des dicken Installationsrohrs 3 in den Anschlusskanal 21 gestoppt.

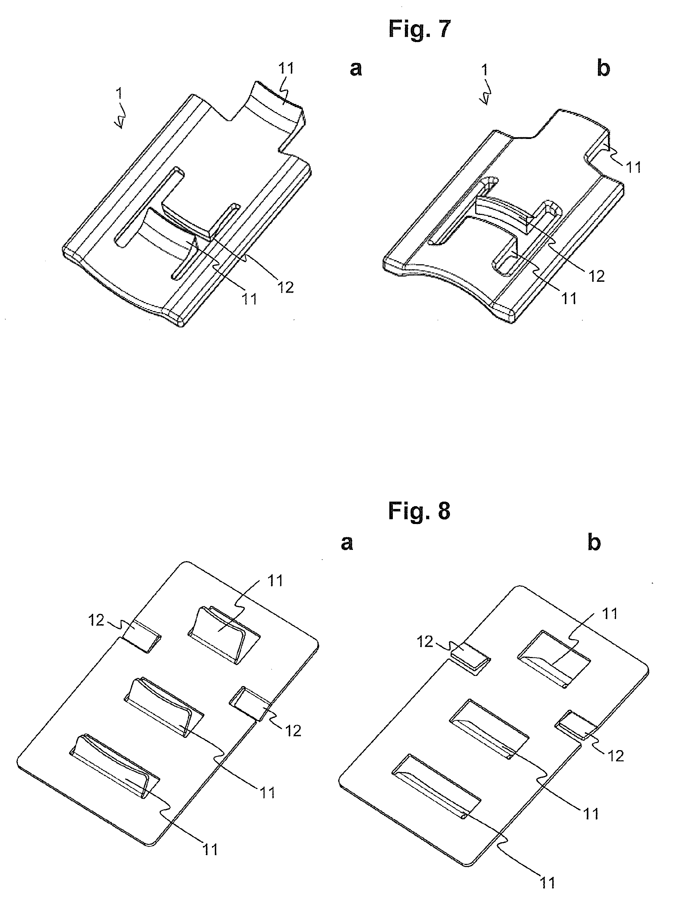

Das Installationsrohr 3 wird am Anstoss 27 gestoppt, wodurch die Position des Installationsrohrs 3 in Bezug auf den Anschlusskanal 21 und die Installationsdose 2 definiert werden kann. Durch die genau Positionierung des Installationsrohrs 3 wird die Dichtheit der Installationsdose 2 gegen das Eindringen von Betonwasser unterstützt. Die Dichtheit wird dank des Anstosses 27 auch verbessert, weil das Installationsrohr 3 nicht durch ein Einklemmen in der Kanalverengung 26 asymmetrisch deformiert wird. Die erste Rastkralle 11a ist in eine Rille des Installationsrohrs 3 eingerastet und das Klemmelement 12 ist in der Aussparung 22 des Anschlusskanals 21 eingeklemmt. Das Installationsrohr 3 mit dem dicken Aussendurchmesser ist somit an der Installationsdose 2 über das Rastelement 1 befestigt. Die Kanalverengung 26 ermöglicht es, dass beispielsweise Elektrokabel (nicht gezeigt) durch das Installationsrohr 3 hindurch barrierefrei respektive ohne hängen zu bleiben in ein Inneres der Installationsdose 2 eingeführt werden können. **Figuren 7** a und b zeigen verschiedene Ansichten eines Rastelements 1 mit zwei Rastkrallen 11 und einem Klemmelement 12. Die Rastkrallen 11 sind je an einen zungenförmigen Steg des Rastelements 1 angeordnet, wodurch die Rastkrallen 11 leicht flexibel am Rastelement 1 angeordnet sind und ein Einrasten am Installationsrohr 3 erleichtert wird. Das Klemmelement 12 ist ebenfalls an einem zungenförmigen Steg des Rastelements 1 angeordnet. Die Flexibilität der Zunge ermöglicht ein leichtes Federn des Klemmelements 12 und damit ein einfaches Einrasten des Klemmelements 12 in der Aussparung 22 des Anschlusskanals 21. **Figuren 8** a und b zeigen verschiedene Ansichten eines Rastelements 1 mit drei Rastkrallen 11 und zwei Klemmelementen 12. Die Klemmelemente 12 sind nebeneinander angeordnet und dienen dem Fixieren des Rastelements 1 im Anschlusskanal 21. Die drei Rastkrallen 11 können in das Installationsrohr 3 eingreifen. Durch die leicht unterschiedlichen Grössen der drei Rastkrallen 11 kann beispielsweise an der hinteren Rastkralle 11 ein kleineres Installationsrohr 3 befestigt werden als an der vordersten und kleinsten Rastkralle 11, an welcher das grösste Installationsrohr 3 befestigt werden kann. Die Begriffe vorn und hinten beziehen sich dabei auf die Einführungsrichtung, wobei das hintere Ende des Rastelements 1 zuerst in den Anschlusskanal 21 eingeführt wird. Der im Vordergrund gezeigte Teil des Rastelements 1 ist somit der vordere Teil des Rastelements 1 und das Rastkralle 11 in der Nähe der beiden Klemmelemente 12 ist im hinteren Teil des Rastelements 1 angeordnet.

## Patentansprüche

1. Eine Vorrichtung für Elektroinstallationen, aufweisend mindestens eine Elektroinstallationsdose (2) und mindestens ein Rastelement (1), wobei die Elektroinstallationsdose (2) mindestens einen Anschlusskanal (21) zum Einführen eines gerillten Installationsrohrs (3) aufweist und wobei das Rastelement (1) mindestens eine Rastkralle (11) zur einrastenden Befestigung eines Installationsrohrs (3) im Anschlusskanal (21) aufweist, **dadurch gekennzeichnet, dass** das Rastelement (1) separat von der Elektroinstallationsdose (2) ausgebildet ist.

2. Vorrichtung gemäss Anspruch 1, wobei das Rastelement (1) mindestens ein Klemmelement (12) aufweist, wobei das Rastelement (1) durch das Klemmelement (12) im Anschlusskanal (21) fixierbar ist.

3. Vorrichtung gemäss Anspruch 2, wobei der Anschlusskanal (21) mindestens eine Aussparung (22) aufweist, wobei das Klemmelement (12) in der Aussparung (22) fixierbar ist.

4. Vorrichtung gemäss einem der Ansprüche 1 bis 3, wobei der Anschlusskanal (21) mindestens eine Aufnahme (23) für das Einführen des Rastelements (1) aufweist.

5. Vorrichtung gemäss Anspruch 4, wobei die Aufnahme (23) zur Form des Rastelements (1) korrespondiert.

6. Vorrichtung gemäss einem der Ansprüche 4 bis 5, wobei die Aufnahme eine Nut und das Rastelement 1 einen korrespondieren Steg aufweist.

7. Vorrichtung gemäss einem der Ansprüche 1 bis 6, wobei eine rohrseitige Fläche des Rastelements (1) zumindest abschnittsweise einer Kreiszylinderfläche entspricht.

8. Vorrichtung gemäss einem der Ansprüche 1 bis 7, wobei Installationsrohre (3) mit unterschiedlichen Durchmessern am Rastelement (1) einrastbar sind.

9. Vorrichtung gemäss einem der Ansprüche 1 bis 8, wobei mindestens die Rastkralle (11) und/oder ein Klemmelement (12) des Rastelements (1) eine höhere Festigkeit als die Elektroinstallationsdose (2) aufweist.

10. Vorrichtung gemäss einem der Ansprüche 1 bis 9, wobei das Rastelement (1) in einem Zwei- beziehungsweise Mehrkomponentenspritzgussverfahren hergestellt ist.

11. Vorrichtung gemäss einem der Ansprüche 1 bis 10, wobei maximal 50 %, insbesondere maximal 25 % eines inneren Umfangs des Anschlusskanals (21) durch das Rastelement (1) abdeckbar sind.

12. Vorrichtung gemäss einem der Ansprüche 1 bis 11, wobei der Anschlusskanal (21) einen ersten Abschnitt (21 a) und einen zweiten Abschnitt (21b) aufweist, wobei der erste Abschnitt einen grösseren Innendurchmesser aufweist als der zweite Abschnitt und der erste Abschnitt (21a) näher an einer Einführungsöffnung des Anschlusskanals (21) angeordnet ist als der zweite Abschnitt (21b).

13. Vorrichtung gemäss Anspruch 12, wobei eine Kanalverengung (26) vom ersten Abschnitt (21a) zum zweiten Abschnitt (21b) des Kabelkanals zumindest abschnittsweise als stetiger Übergang ausgebildet ist.

14. Vorrichtung gemäss einem der Ansprüche 1 bis 13, wobei das Rastelement (1) mindestens zwei Rastkrallen (11) aufweist.

15. Vorrichtung gemäss einem der Ansprüche 12 bis 14, wobei in einem eingerasteten Zustand des Rastelements (1) im Anschlusskanal (21) eine erste Rastkralle (11a) im ersten Abschnitt (21a) und eine zweite Rastkralle (11b) im zweiten Abschnitt (21b) des Anschlusskanals angeordnet ist.
